# EUROPEAN PATENT SPECIFICATION

(11) **EP 4 467 970 B1**
(45) Date of publication and mention of the grant of the patent: **23.04.2025**
(21) Application number: 24175808.5
(22) Date of filing: 14.05.2024
(51) Int. Cl.: G01N 27/07, G01N 27/30

(54) **PASTE MULTIELECTRODE BODY FOR SIMULTANEOUS AVERAGING MEASUREMENTS**
PASTE-MULTIELEKTRODENKÖRPER FÜR GLEICHZEITIGE MITTELWERTMESSUNGEN
CORPS MULTIÉLECTRODES EN PÂTE POUR DES MESURES SIMULTANÉES DE LA MOYENNE

(30) Priority: 24.05.2023 PL 44497423
(43) Date of publication of application: 27.11.2024
(73) Proprietor: Uniwersytet Lodzki, 90-136 Lodz (PL)
(72) Inventor: Smarzewska, Sylwia, 94-058 Lodz (PL); Guziejewski, Dariusz, 94-054 Lodz (PL); Smarzewski, Grzegorz, 94-058 Lodz (PL)
(74) Representative: Kicinska-Fujawa, Alicja

(56) References cited:
- WO-A1-2023/286864
- JÖRGEN LINDQUIST: "A new carbon paste electrode holder and a simple method for preparing reproducible electrode surfaces", 18 January 1968 (1968-01-18), J. Electroanal. Chem., pages 204 - 205, XP093217231, Retrieved from the Internet <URL:https://www.sciencedirect.com/science/article/pii/S0022072868801792?via%3Dihub> DOI: 10.1016/s0022-0728(68)80179-2

## Description

The subject matter of an invention is a paste multielectrode body for averaged simultaneous measurements having a high-precision surface renewal mechanism applicable to electrochemical measurements.

### Background Art

In modern electrochemical measurements, especially polarographic, amperometric and voltammetric measurements, a three-electrode measuring system is used. Its most important element is the working electrode, which controls the measurement process with its small size, i.e., it limits the amount of charge or the current flow intensity or the number of electrons exchanged during measurements. One of the working electrode types used is the paste electrode. Its common feature is that, on one side, an electrical contact is made for connections in an electrical circuit with other elements of the measuring system and its control elements. On the other side, through the surface of the working material (in this case the paste), contact occurs with a conductive solution, the electrolyte, which constitutes another element of the measuring system and guarantees the continuity of the electrical circuit through the contact with the other electrodes.

In measurements, working electrode bodies containing a portion of conductive paste are used, organized in such a way that only a single contact surface with the electrolyte solution is allowed. The composition of the paste can be varied, adjusted to the requirements of the particular analysis, but it must always be well conductive and not react with the tested analyte and insoluble in the basic electrolyte solution. Typically, the conductive paste is made of carbon, e.g. graphite, and a binder, e.g. paraffin oil, silicone oil, etc. The paste components are mixed together for a given time unit and then placed in the electrode body. The electrode described serves for electrochemical measurements of physicochemical phenomena occurring in the close vicinity of its surface. After each measurement, the paste surface requires refreshing. The refreshing procedure depends on the type of electrode body used.

The Czech patent application No. CZ20023939A3 describes a body in which the paste is renewed by squeezing a specified portion of it using a micrometric screw, removing the excess and smoothing the surface, e.g. on wet filter paper. A similar carbon paste electrode holder is described in Jörgen Lindquist: "A new carbon paste electrode holder and a simple method for preparing reproducible electrode surfaces", J. Electroanal. Chem. 1(1968-01-18), pages 204-205.

The renewal procedure involves mechanical actions, and its effectiveness and repeatability depend primarily on the experience and level of the manual skills of the preparer. This makes achieving statistically consistent measurement results relatively difficult. WO 2023/286864 A1 describes a body having a plurality of conductive rods placed in an insulating body and connected to an electric circuit.

An electrode that is considered to be perfectly reproducible is the mercury electrode with its smooth surface, where the measurement is performed on an almost always perfectly repeatable and reproducible mercury drops, especially under conditions of electromechanical generation. For other electrodes, such as disk electrodes with a working material made of solids like precious metals or various types of carbon, including paste electrodes, the repeatability of the measurement can be problematic. This is due to the standard measurement error accompanied by the above-mentioned issue of mechanical refreshing and reproducing the ideally identical surface (also in a microscopic cross-section) while considering the real electroactive surface. Even with well-conducted measurements in accordance with Good Laboratory Practice (GLP), in case of paste electrodes, the measurement error can be around 10-15%. The variability of the obtained measurement results is particularly problematic when examining parabolic dependencies (e.g. optimization of the pH value of the base electrolyte environment for testing real samples). Loading the measurement points with a significant error resulting from a different electroactive surface may lead to drawing erroneous conclusions regarding the actual position of the maximum for such relationships, as well as for any other findings obtained during the research. The most common solution is to perform several measurements under identical conditions, after each renewal of the working electrode surface, e.g. 3 or 5 times, and then average the measurement result based on them.

### Summary of Invention

The essence of the paste multielectrode body according to the invention is its composition. It includes a conductive electrode carrier in the shape of a disc made of stainless steel, a conductive electrode carrier in the shape of a roller made of stainless steel and a conductive electrode carrier in the shape of a cylinder made of stainless steel, and rods of the conductive electrode carrier in the shape of a cylinder with one threaded end, also made of stainless steel. Additionally, it contains a tube made of stainless steel, and a housing of the entire paste electrode body made of a chemically resistant material. The elements ensuring chemical inertness and electrical insulation are two upper and lower sleeves, both made of a chemically resistant material. While the lower insulating sleeve has a scale applied on its surface enabling precise refreshing and an opening adapted to the diameter of the conductive carrier in the shape of a disc, the upper one has a marker applied on its surface enabling precise refreshing. On one side, it has a hole adapted to the diameter of the contact with the cylindrical electrode carrier, on the other side, an opening adapted in diameter to the central part of the cylindrical electrode carrier. The disc-shaped electrode carrier has a central hole at the outlet part and on the underside it has n-threaded holes in which the conductive carrier rods are placed. In addition, the cylindrical electrode carrier is turned in a way enabling the tapering the both ends of it. The upper end, being the narrowest one, is adapted in diameter to the upper insulating sleeve, constituting an electrical contact connecting the electrode with the potentiostat/electrical circuit. The central part of the cylindrical conductive carrier has the largest diameter matched to the upper insulating sleeve, and its lower part is additionally threaded. The cylindrical electrode carrier has a threaded hole in its upper part matched to the cylindrical electrode carrier, while its lower part is threaded and matched in diameter to the cylinder made of stainless steel. This cylinder, in turn, has a threaded hole at the top, into which the cylindrical electrode carrier is screwed with its threaded end. In addition, the cylinder itself is matched in diameter to the central hole of the housing of the paste electrode body into which it is screwed. The housing of the body also includes outlet holes perfectly matched in size to the diameter of the conductive carrier rods.

### Advantageous Effects of Invention

The main advantage of the body according to the invention is that it allows to obtain averaged results from a single measurement. Due to the use of a multiplied surface of the working electrode, it is possible to obtain n measurement results during a single measurement, provided that n paste electrodes are used. This allows to obtain more consistent and repeatable results, burdened with a smaller measurement error. This also results in reduced consumption of reagents and consumables, electrical energy and time.

An additional advantage is the simultaneous operation of renewing all working surfaces, which additionally prevents the occurrence of random errors that determine the quality of the electrochemical measurements performed. The solution presents an alternative, environmental-friendly approach to conduct multiple measurements, particularly crucial for optimization studies or analytical purposes. In addition, the usage of the presented electrode body for electrochemical measurements helps to achieve a high degree of accuracy by using a precise scale with a graduation ensuring increased repeatability of generating a new electrode surface. Thus, it ensures the optimization of the amount of conductive paste removed from the electrode, which is particularly important if the physicochemical processes being studied favour the adsorption processes of substrates or products of the electrode reaction.

Moreover, the proposed invention enables simultaneous refreshing of the surface in a manner that is not only repeatable, but also mechanically identical for each of the n surfaces of the conductive paste of the working electrode. Such a solution has not been available so far.

### Brief Description of Drawings

The invention is illustrated in embodiment example and figures, where:

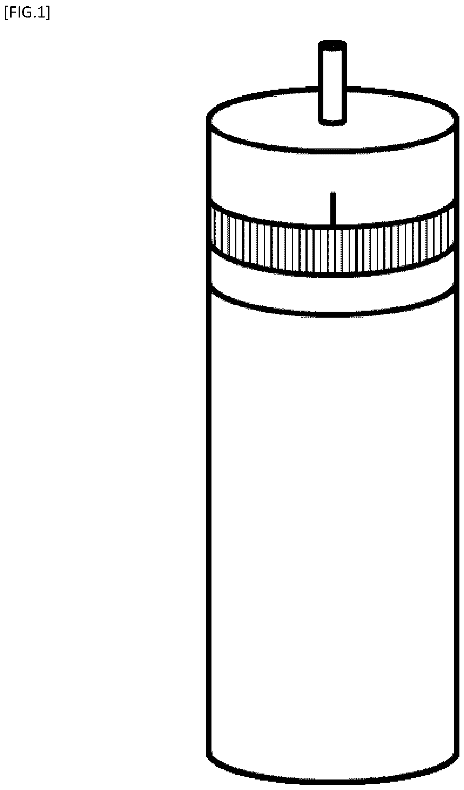

[Fig. 1] shows a side view of the complete, assembled body of the paste multielectrode;

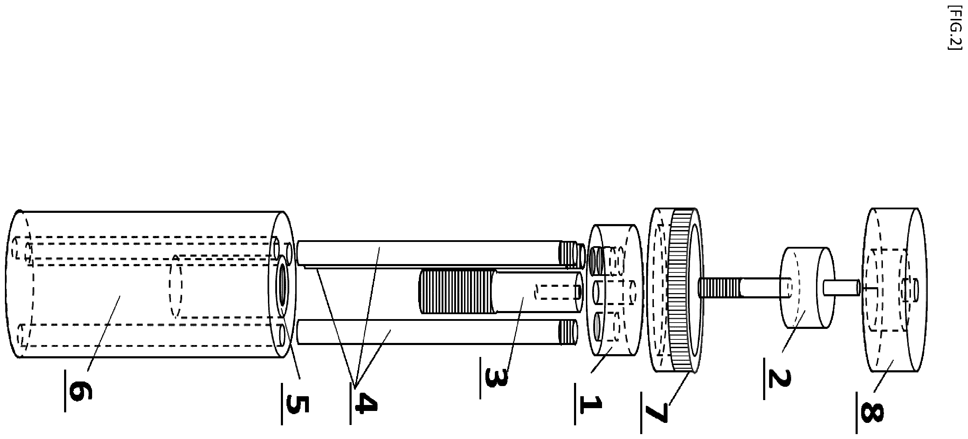

[Fig. 2] shows a side view of a complete paste multielectrode body disassembled into parts;

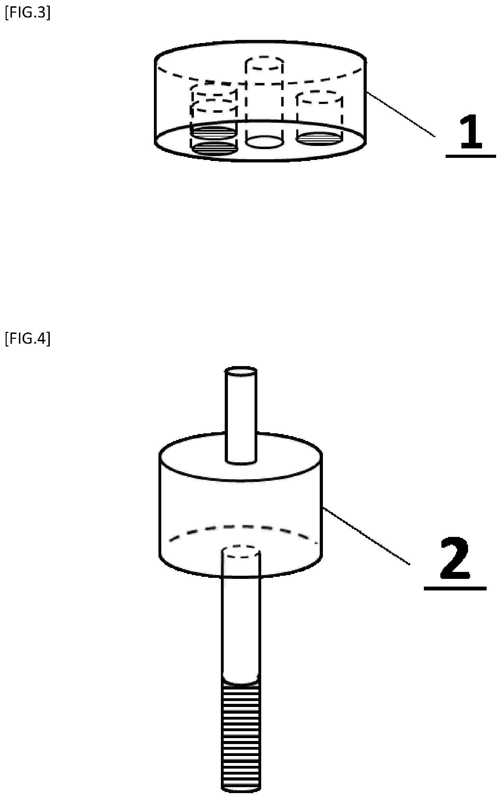

[Fig. 3] shows a conductive electrode carrier in the shape of a disc;
[Fig. 4] shows a conductive electrode carrier in the shape of a roller;

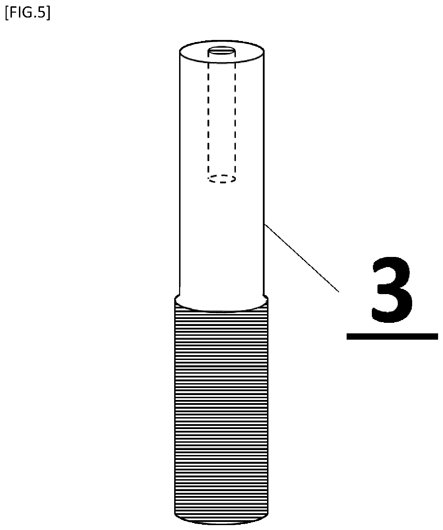

[Fig. 5] shows a conductive electrode carrier in the shape of a tube;

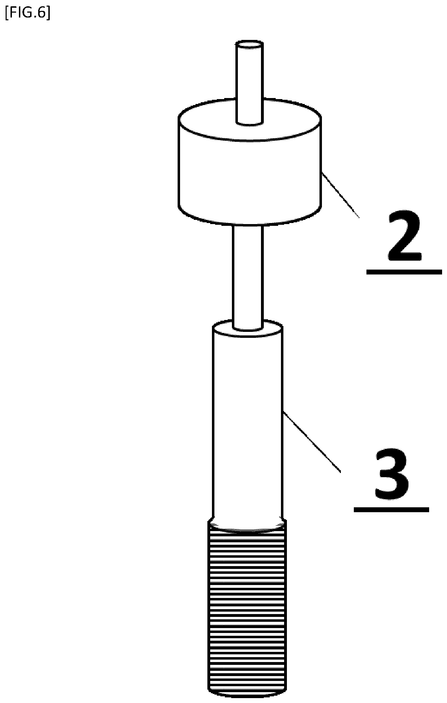

[Fig. 6] shows a roller-shaped carrier after being screwed together with a cylinder-shaped carrier;

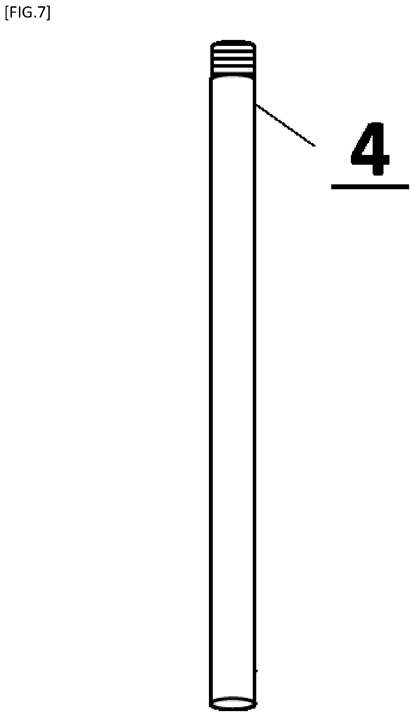

[Fig. 7] shows a single conductive rod of the electrode carrier;

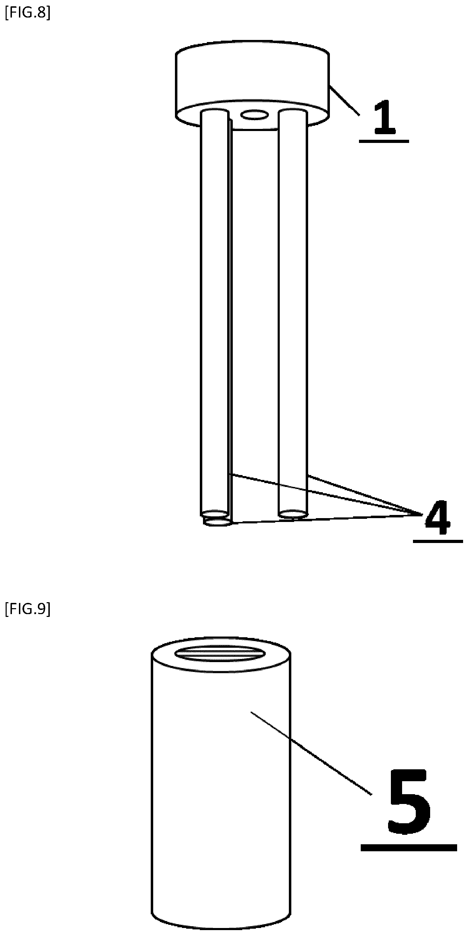

[Fig. 8] shows a disc-shaped electrode carrier with conductive rods mounted therein;
[Fig. 9] shows a roller that is not an electrode carrier;

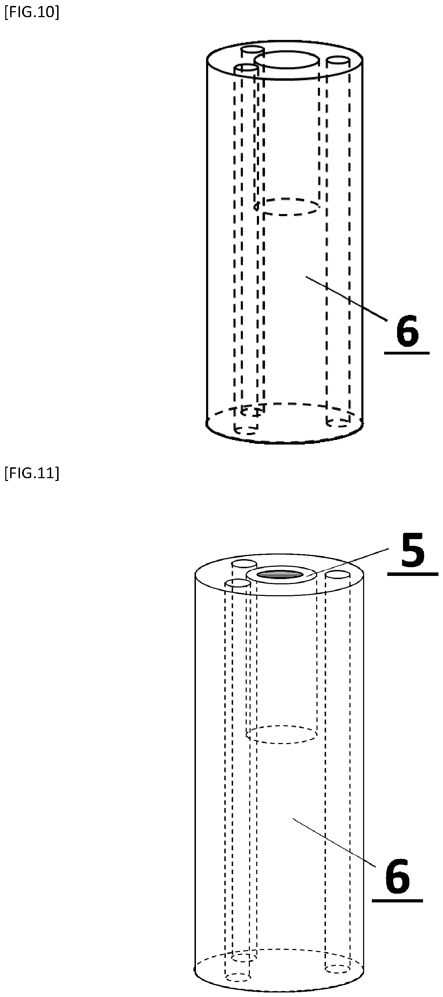

[Fig. 10] shows the housing of the body;
[Fig. 11] shows the body casing with the marked connection point to the roller;

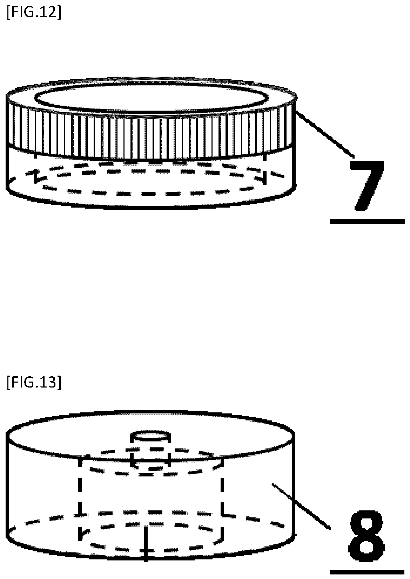

[Fig. 12] shows the lower insulating sleeve;
[Fig. 13] shows the upper insulating sleeve.

### Description of Embodiments

The body of the paste multielectrode for averaged simultaneous measurements consists of a disc-shaped conductive electrode carrier 1 made of stainless steel, a roller-shaped conductive electrode carrier 2 made of stainless steel, a cylindrical conductive electrode carrier 3 made of stainless steel, roller-shaped conductive electrode carrier rods 4 with one threaded end made of stainless steel, a roller 5 made of stainless steel, a housing 6 made of a chemically resistant material, a lower insulating sleeve 7 made of a chemically resistant material and an upper insulating sleeve 8 made of a chemically resistant material. The electrode carrier 1 has an outlet hole in its central part and three holes on its bottom side in which the electrode rods 4 are placed. In addition, the roller-shaped electrode carrier 2 is turned in such a way that both its ends are tapered, the upper end being the narrowest, matched in diameter to the upper insulating sleeve 8, which constitutes an electrical contact connecting the electrode with the potentiostat/electrical circuit. The central part has the largest diameter adapted to the upper insulating sleeve 8. The electrode carrier 3 in the shape of a cylinder has a threaded hole in its upper part adapted to the carrier 2. The diameter of the roller 5 is adapted to the central hole of the housing 6, which additionally has a threaded hole adapted to the threaded part of the carrier 3. The housing 6 has outlet holes corresponding to the diameter and distribution of the rods 4 and one central non-outlet hole, corresponding to the length of the roller 5. The lower insulating sleeve 7, which ensures chemical inertness and electrical insulation, has a scale applied to its surface, enabling precise refreshing, and an opening adapted to the diameter of the carrier 1. The upper insulating sleeve 8, which also ensures chemical inertness and electrical insulation during operation, has a marker applied to its surface, enabling precise refreshing, but on one side it has an opening adapted to the diameter of the contact with the carrier 2, and on the other side the hole adapted to the diameter of the central part carrier 2.

The principle of operation of the paste multielectrode body according to the invention is as follows. Three electrode rods 4 are mounted in threaded positions of the electrode carrier 1. Then, an electrode carrier 2 is applied from above, so that the narrower end of the electrode carrier 2 forms a contact and its central part rests on the electrode carrier 1. An electrode carrier 3 is mounted to the lower part of the electrode carrier 2, which has passed through the electrode carrier 1. The carriers 1 and 2 are protected with a chemically resistant material, using sleeves 7 and 8, respectively. The electrode carrier 3 is connected to the roller 5 by slight use of a threaded connection in order to connect the individual elements of the structure into a whole. At this time, three rods 4 are inserted into three holes in the housing 6. At this stage of the connection, three free spaces in the shape of a roller remain in the housing 6, intended for the insertion of the electrode rods 4 after further screwing in the sleeve 7. A conductive paste of a composition selected by the user is placed in these empty spaces. The paste fills this free space and must be in contact with the ends of the rods 4. Before measurement, the surfaces of all pastes are smoothed at the same time by moving the lower part of the housing 6 over the surface of wet filter paper. At the moment of connection, through the contact of the electrode carrier 2, to the potentiostat and placing in a vessel with electrolyte containing the test object, the measurement is carried out simultaneously on all working surfaces of the conductive paste located on the bottom of the housing 6 and in contact with the electrolyte solution.

Due to individual differences in the structure of conductive materials, each of the working surfaces acts as a separate sensor. These differences occur on a macro scale unaffected by the electrolytic processes taking place on the other working surfaces. Therefore, the measurement result is obtained in the form of a current intensity that is the sum of the current intensity from independent working surfaces, or, alternatively, obtained in subsequent measurement series. The obtained measurement result is divided by the number of working surfaces used and an average value is obtained, which is the final output data from the measuring system.

After measurement, in order to reproducibly and simultaneously renew all accessible 3 working surfaces of the conductive paste, the carrier 3 is screwed into the housing 6 by a distance determined using the scales on the sleeves 8 and 7. This causes the rods 4 to move inside the housing 6 and pushes out the excess used conductive paste below the housing 6. The ejected paste is removed and the surfaces of all electrodes are smoothed again on wet filter paper. Using the marker and the scale, respectively on the sleeve 8 and sleeve 7, the sleeve 8 is rotated by a part of a turn clockwise, depending on the scale used, by three marks on the sleeve 7 in the case of electrode processes without adsorption, and by six marks when analyte adsorption occurs or is suspected. The renewal procedure can be repeated many times.

## Claims

1. A paste multielectrode body for averaged simultaneous measurements, **characterized in that** it consists of a conductive electrode carrier (1) in the shape of a disc made of stainless steel, a conductive electrode carrier (2) in the roller-shape with a threaded one end made of stainless steel, a conductive electrode carrier (3) in the shape of a cylinder with a threaded one end made of stainless steel, rods of the conductive electrode carrier (4) in the roller-shape, with a threaded one end, made of stainless steel, a roller (5) made of stainless steel, a housing (6) made of a chemically resistant material, a lower insulating sleeve (7) made of a chemically resistant material, an upper insulating sleeve (8) made of a chemically resistant material, wherein the conductive electrode carrier (1) in the shape of a disc has an outlet hole in its central part and n-threaded holes on the bottom side in which the rods of the conductive electrode carrier (4) are placed, and in addition, the conductive electrode carrier (2) in the roller-shape is turned in such a way that both of its ends are tapered, the upper end is the narrowest, adjusted in diameter to the upper insulating sleeve (8) constituting an electrical contact connecting the electrode with the potentiostat/electric circuit, and the central part has the largest diameter adjusted to the upper insulating sleeve (8), in turn, the conductive electrode carrier (3) in the shape of a cylinder has in its upper part a threaded hole adjusted to the electrode carrier (2), while its lower threaded part is adjusted in diameter to the roller (5), which in turn has from the top a threaded hole into which the conductive electrode carrier (3) in the shape of a cylinder is screwed, wherein the roller (5) itself is adjusted in diameter to the central hole of the housing (6) into which it is screwed, and the housing (6) itself has additionally outlet holes ideally matched in size to the diameter of the conductive carrier rods (4), and additionally, the lower insulating sleeve (7), which ensures chemical inertness and electrical insulation, has a scale applied on its surface to enable precise refreshing and a hole adjusted to the diameter of the conductive electrode carrier (1), while the upper insulating sleeve (8), which also ensures chemical inertness and electrical insulation during operation, has a marker applied on its surface to enable precise refreshing, but on one side it has an opening adjusted to the diameter of the contact with the conductive electrode carrier (2), and on the other side it has a hole adjusted in diameter to the central part of the conductive electrode carrier (2).

## Patentansprüche

1. Ein Pasten-Multielektrodenkörper für gemittelte Simultanmessungen, **dadurch gekennzeichnet, dass** er aus einem leitfähigen Elektrodenträger (1) in Form einer aus rostfreiem Stahl ausgeführten Scheibe, einem leitfähigen, aus rostfreiem Stahl ausgeführten Elektrodenträger (2) in Form einer Rolle mit Gewinde an einem Ende, einem leitfähigen, aus rostfreiem Stahl ausgeführten Elektrodenträger (3) in Form eines Zylinders mit Gewinde an einem Ende, Stäben des leitfähigen, aus rostfreiem Stahl ausgeführten Elektrodenträgers (4) in Form einer Rolle mit Gewinde an einem Ende, einer Rolle (5) aus rostfreiem Stahl, einem Gehäuse (6) aus einem chemisch beständigen Material, einer unteren Isolierhülse (7) aus einem chemisch beständigen Material, einer oberen Isolierhülse (8) aus einem chemisch beständigen Material besteht, wobei der leitfähige Elektrodenträger (1) in Form einer Scheibe in seinem mittleren Teil eine Auslauföffnung und an der Unterseite n-Gewindebohrungen aufweist, in denen die Stäbe des leitfähigen Elektrodenträgers (4) angeordnet sind, und darüber hinaus der leitfähige Elektrodenträger (2) in Form einer Rolle so gedreht ist, dass seine beiden Enden konisch sind, wobei das obere Ende das schmalste, und im Durchmesser an die obere Isolierhülse (8) angepasst ist, die einen elektrischen Kontakt bildet, der die Elektrode mit dem Potentiostat/Stromkreis verbindet, und der mittlere Teil den größten Durchmesser hat, der an die obere Isolierhülse (8) angepasst ist, wobei der leitfähige Elektrodenträger (3) in Form eines Zylinders wiederum in seinem oberen Teil eine Gewindebohrung aufweist, die an den Elektrodenträger (2) angepasst ist, während sein unterer Gewindeteil im Durchmesser an die Rolle (5) angepasst ist, die wiederum von oben eine Gewindebohrung aufweist, in die der leitfähige Elektrodenträger (3) in Form eines Zylinders eingeschraubt ist, wobei die Rolle (5) selbst im Durchmesser an die mittlere Öffnung des Gehäuses (6) angepasst ist, in das sie eingeschraubt ist, und das Gehäuse (6) selbst zusätzlich Auslauföffnungen aufweist, deren Größe genau an den Durchmesser der leitfähigen Trägerstäbe (4) angepasst ist, und zusätzlich die untere Isolierhülse (7) aufweist, die chemische Reaktionsträgheit und elektrische Isolierung gewährleistet, sowie eine auf ihrer Oberfläche aufgebrachte Skala, um ein präzises Auffrischen zu ermöglichen, und eine Öffnungen, die an den Durchmesser des leitfähigen Elektrodenträgers (1) angepasst ist, während die obere Isolierhülse (8), die auch die chemische Reaktionsträgheit und die elektrische Isolierung beim Betrieb gewährleistet, eine auf ihrer Oberfläche aufgebrachte Markierung aufweist, um ein präzises Auffrischen zu ermöglichen, weist jedoch auf einer Seite eine Öffnung auf, die an den Durchmesser des Kontakts mit dem leitfähigen Elektrodenträger (2) angepasst ist, und auf der anderen Seite eine Bohrung, deren Durchmesser an den zentralen Teil des leitfähigen Elektrodenträgers (2) angepasst ist.

## Revendications

1. Corps multiélectrode en pâte pour mesures simultanées moyennées, **caractérisé en ce qu'**il est constitué d'un support (1) d'électrode conducteur en forme de disque en acier inoxydable, d'un support (2) d'électrode conducteur en forme de rouleau avec une extrémité filetée en acier inoxydable, d'un support (3) d'électrode conducteur en forme de cylindre avec une extrémité filetée en acier inoxydable, de tiges du support (4) d'électrode conducteur en forme de rouleau, avec une extrémité filetée en acier inoxydable, d'un rouleau (5) en acier inoxydable, d'un boîtier (6) en matériau résistant aux produits chimiques, d'un manchon isolant inférieur (7) en matériau résistant aux produits chimiques, d'un manchon isolant supérieur (8) en matériau résistant aux produits chimiques, le support (1) d'électrode conducteur en forme de disque présentant une ouverture de sortie dans sa partie centrale et n ouvertures filetées sur le côté inférieur dans lesquelles sont placées les tiges du support (4) d'électrode conducteur, et en outre, le support (2) d'électrode conducteur en forme de rouleau est tourné de telle manière que les deux ses extrémités sont effilées, l'extrémité supérieure est la plus étroite, ajustée en diamètre au manchon isolant supérieur (8) constituant un contact électrique reliant l'électrode au potentiostat/circuit électrique, et la partie centrale a le plus grand diamètre ajusté au manchon isolant supérieur (8), à son tour, le support (3) d'électrode conducteur en forme de cylindre a dans sa partie supérieure une ouverture filetée ajustée au support d'électrode (2), tandis que sa partie filetée inférieure est ajustée en diamètre au rouleau (5), qui à son tour a par le haut un ouverturefiletée dans laquelle le support (3) d'électrode conducteur en forme de cylindre est vissé, le rouleau (5) lui-même étant ajusté en diamètre à la ouverture centrale du boîtier (6) dans laquelle il est vissé, et le boîtier (6) lui-même a en plus des ouvertures de sortie idéalement adaptées en taille au diamètre des tiges de support (4) d'électrode conducteur, et en plus, le manchon isolant inférieur (7), qui assure l'inertie chimique et l'isolation électrique, a une échelle appliquée sur sa surface pour permettre un rafraîchissement précis et une ouverture ajustée au diamètre du support (1) d'électrode conducteur, tandis que la partie supérieure du manchon isolant supérieur (8) (8), qui assure également l'inertie chimique et l'isolation électrique pendant le fonctionnement, comporte un marqueur appliqué sur sa surface pour permettre un rafraîchissement précis, mais d'un côté il comporte une ouverture ajustée au diamètre du contact avec le support (2) d'électrode conducteur, et de l'autre côté il comporte une ouverture ajustée en diamètre à la partie centrale du support (2) d'électrode conducteur.
